# EUROPEAN PATENT APPLICATION

(11) **EP 4 629 179 A1**
(43) Date of publication of application: **08.10.2025**
(21) Application number: 23896610.5
(22) Date of filing: 21.11.2023
(51) Int. Cl.: G06T 17/00, G06T 7/20

(54) **METHOD AND APPARATUS FOR GENERATING 3D HAND MODEL, AND ELECTRONIC DEVICE**

(30) Priority: 30.11.2022 CN 202211527549
(71) Applicant: Hangzhou Alibaba International Internet Industry Co., Ltd., Hangzhou, Zhejiang 310056 (CN)
(72) Inventor: YANG, Wenbo, Hangzhou, Zhejiang 311121 (CN); YANG, Changyuan, Hangzhou, Zhejiang 311121 (CN); LIU, Kuilong, Hangzhou, Zhejiang 311121 (CN); ZHAN, Pengxin, Hangzhou, Zhejiang 311121 (CN); WANG, Gaige, Hangzhou, Zhejiang 311121 (CN); CHEN, Xuhong, Hangzhou, Zhejiang 311121 (CN); ZHUANG, Yicun, Hangzhou, Zhejiang 311121 (CN); MEI, Bo, Hangzhou, Zhejiang 311121 (CN); YANG, Zhiyuan, Hangzhou, Zhejiang 311121 (CN)
(74) Representative: Patentgruppen A/S
(86) International application number: PCT/CN2023/133095
(87) International publication number: WO 2024/114459

(57) **Abstract**

Disclosed in the embodiments of the present application are a method, apparatus, and electronic device for generating a 3D hand model. The method comprises: acquiring a hand movement video obtained by capturing images during a process in which a target user rotates a wrist joint from a first angle to a second angle while maintaining a hand posture with five fingers naturally extended, so that the hand movement video comprises a plurality of image content frames captured during a rotation process of the hand from a front/side view to a side/front view; acquiring curvature information of the fingers and/or nails from the plurality of image content frames acquired during the rotation process; and creating a 3D hand model of the target user based on the hand movement video, and optimizing key point parameters of the fingers and/or nails in the 3D hand model based on the curvature information of the fingers and/or nails. The embodiments of the present application enable digital reconstruction of the hand in a C-end consumption scenario and improve the reconstruction accuracy of the hand.

## Description

This present application claims priority to the Chinese patent application No. 202211527549.7 filed with the Chinese Patent Office on November 30, 2022 and titled "METHOD AND APPARATUS FOR GENERATING 3D HAND MODEL, AND ELECTRONIC DEVICE," which is incorporated by reference herein in its entirety.

### TECHNICAL FIELD

The present application relates to the technical field of digital restoration of hands, and more particularly, to methods, apparatuses, and electronic devices for generating a 3D hand model.

### BACKGROUND

With the rise of the concept of the metaverse (a virtual world built by human beings using digital technology, which maps or transcends the real world and can interact with the real world), the demand and services for digitally reconstructing people, goods, and places so that they are rendered into the metaverse are increasing day by day. The digital reconstruction of human beings includes multiple demands, such as the whole body, torso, limbs, etc. Among them, the digital reconstruction of hands is one of the high-frequency demands as many scenarios in the metaverse require hands.

When a hand is to be digitally reconstructed, it is necessary to construct a 3D model of the user's hand. In the conventional techniques, this is usually generated by taking 360-degree photos of the hands. Such a method usually requires the assistance of other people in completing the shooting process, and is usually suitable for scenarios where the 3D models are created in advance, which are then published online for interaction. However, in application scenarios for C-end users (consumers), it may be necessary to build a real-time 3D model of a specific user's hand, and the user might need to complete the operation by himself/herself through his/her mobile phone or other terminal devices. The above method is thus no longer applicable.

### SUMMARY

The present application provides a method, an apparatus, and an electronic device for generating a 3D hand model, enabling digital reconstruction of the hand in a C-end consumption scenario and improving the reconstruction accuracy of the hand.

The present application provides the following solutions.

A method for generating a 3D hand model, comprising:
acquiring a hand movement video obtained by capturing images during a process in which a target user rotates a wrist joint from a first angle to a second angle while maintaining a hand posture with five fingers naturally extended, so that the hand movement video comprises a plurality of image content frames captured during a rotation process of the hand from a front/side view to a side/front view;
acquiring curvature information of the fingers and/or nails from the plurality of image content frames acquired during the rotation process; and
creating a 3D hand model of the target user based on the hand movement video, and optimizing key point parameters of the fingers and/or nails in the 3D hand model based on the curvature information of the fingers and/or nails.

Herein, an angle difference between the second angle and the first angle is greater than or equal to 180 degrees.

Herein, an angle of the wrist joint when the back of the hand/palm faces upward to an image acquisition device while the hand posture is maintained with five fingers naturally extended is taken as the first angle; after the wrist joint is rotated toward/away from the body until the palm/back of the hand faces upward, an angle at which the rotation continues until a limit of rotation is reached is taken as the second angle.

Herein, the creating the 3D hand model of the target user based on the hand movement video comprises:
creating a 3D hand base model of the target user according to the hand movement video, and acquiring a hand texture map of the target user;
attaching the hand texture map to the 3D hand base model to generate the 3D hand model of the target user.

Herein, the creating the 3D hand base model of the target user according to the hand movement video comprises:
determining, from the hand movement video, hand profile information;
determining, from a plurality of standard 3D hand base models created in advance, a target standard 3D hand base model satisfying a similarity condition with the hand profile, wherein the standard 3D hand base model is a parameterized model; and
adjusting, according to the hand profile information, the key point parameters in the target standard 3D hand base model to obtain a first model, so as to generate, according to the first model, the 3D hand base model of the target user.

The method further comprises:
determining, from the hand movement video, nail profile information;
determining, from a plurality of standard 3D nail base models created in advance, a target standard 3D nail base model satisfying a similarity condition with the nail profile, wherein the standard 3D nail base model is a parameterized model; and
adjusting, according to the nail profile information, the key point parameters in the target standard 3D nail base model to obtain a second model.

The generating, according to the first model, the 3D hand base model of the target user comprises:
generating a 3D hand base model of the target user by aligning and fitting the second model to the first model.

Herein, the optimizing key point parameters of the fingers and/or nails in the 3D hand model based on the curvature information of the fingers and/or nails comprises:
optimizing, according to the curvature information of the nails, key point parameters in the second model.

Herein, the acquiring the hand texture map of the target user comprises:
identifying and segmenting a plurality of local images of texture map surfaces from the hand movement video according to preset hand texture map style information;
generating a complete hand texture map by fusing the plurality of local images of the texture map surfaces.

An apparatus for generating a 3D hand model, comprising:
a hand movement video acquisition unit, configured for acquiring a hand movement video obtained by capturing images during a process in which a target user rotates a wrist joint from a first angle to a second angle while maintaining a hand posture with five fingers naturally extended, so that the hand movement video comprises a plurality of image content frames captured during a rotation process of the hand from a front/side view to a side/front view;
a curvature information acquisition unit, configured for acquiring curvature information of the fingers and/or nails from the plurality of image content frames acquired during the rotation process; and
a model creation and optimization unit, configured for creating a 3D hand model of the target user based on the hand movement video, and optimizing key point parameters of the fingers and/or nails in the 3D hand model based on the curvature information of the fingers and/or nails.

A computer-readable storage medium having stored thereon a computer program which, when executed by a processor, implements the steps described in any of the above-described methods.

An electronic device, comprising:
one or more processors; and
a memory associated with the one or more processors, the memory being configured to store program instructions which, when read and executed by the one or more processors, execute the steps described in any of the above-described methods.

According to specific embodiments provided by the present application, the present application discloses the following technical effects:
Through the embodiments of the present application, a hand movement video may be acquired by capturing images during a process in which a target user rotates a wrist joint from a first angle to a second angle while maintaining a hand posture with five fingers naturally extended. In this way, a 3D hand model of the target user may be created based on the hand movement video. In this way, since C-end users may complete the hand movement video acquiring operation on their own, it is thus more suitable to be implemented in C-end consumption scenarios. In addition, since the hand movement video may include a plurality of image content frames captured during a rotation process of the hand from a front/side view to a side/front view, the curvature information of the fingers and/or nails may be acquired therefrom. Furthermore, when a 3D hand model of the target user is created based on the hand movement video, key point parameters of the fingers and/or nails in the 3D hand model may also be optimized based on the curvature information of the fingers and/or nails. This may enhance the lifelikeness of the 3D hand model, which in turn allows for more realistic try-on effects in scenarios such as virtual try on of nail care products.

Implementation of any solutions of the present application does not necessarily need to achieve all of the advantages described above.

### BRIEF DESCRIPTION OF DRAWINGS

To describe the technical solutions in the embodiments of the present application or the conventional techniques more clearly, the following briefly describes the accompanying drawings required for describing the embodiments. Apparently, the accompanying drawings in the following description are merely some embodiments of the present application, and those of ordinary skill in the art may further derive other accompanying drawings from these accompanying drawings without inventive efforts.
FIG. 1 is a schematic diagram of a system architecture according to an embodiment of the present application;
FIG. 2 is a flowchart of a method according to an embodiment of the present application;
FIG. 3 is a schematic diagram of a hand movement video acquisition process according to an embodiment of the present application;
FIG. 4 is a schematic diagram of a hand model creation process according to an embodiment of the present application;
FIG. 5 is a schematic diagram of a hand model creation result according to an embodiment of the present application;
FIG. 6 is a schematic diagram of an apparatus according to an embodiment of the present application; and
FIG. 7 is a schematic diagram of an electronic device according to an embodiment of the present application.

### DESCRIPTION OF EMBODIMENTS

The technical solutions in the embodiments of the present application will be clearly and completely described below with reference to the accompanying drawings in the embodiments of the present application. Apparently, the described embodiments are merely some, but not all, of the embodiments of the present application. Based on the embodiments in the present application, all other embodiments obtained by those of ordinary skill in the art shall fall within the protection scope of the present application.

In order to facilitate understanding of the solutions provided by the embodiments of the present application, the following first provides a brief introduction to the background of the needs related to the embodiments of the present application as well as the relevant conventional techniques.

In the embodiments of the present application, the application scenarios are mainly aimed at the C-end (i.e., the client at the consumer user side) consumption areas where real-time digital reconstruction of the hands is required according to the actual situation of a specific user. In other words, a 3D hand model of a user needs to be established in real time. For example, some applications may provide C-end users with smart "nail art" functions in that users may view the try-on effects of various "nail art" products on their fingernails through mobile terminal devices such as mobile phones. To achieve this goal, one feasible way is to implement it through AR (augmented reality). That is, in the process of shooting a hand with a mobile phone, the position of the nails is identified from the captured real-time video frames, and the nail art picture is attached to the video frames for display, so as to show the effect of the user trying on a specific nail art product. The result of this approach, however, is that when the user moves or turns his/her hand to change to a different posture to view the nail art effect, since the position and posture of the nails need to be identified and tracked in real time in the video frame, this may cause problems such as inaccurate attaching of the nail art picture, thus affecting the presentation effect. In addition, nail art images themselves are usually 2D images and lack depth information to the point that they do not seem lifelike enough when attached.

In response to the above situation, it can be resolved with a real-time digital reconstruction of the user's hand, i.e., building a 3D hand model of the user and making it appear as if it is the user's real hand. Afterwards, nail art try-on may be performed based on the 3D hand model, including changing various hand postures and changing various different nail products to see different try-on effects, and so on. Since a 3D hand model is used for nail art try-on, the position information of each point of the 3D hand model in various postures may be saved in the system. Therefore, in the process of changing the hand posture, the 3D coordinates and other information of each point may be quickly determined; and then, according to the information such as the 3D coordinates of the specific target point, it is possible to achieve the attachment of the nail art products to the 3D model, thereby eliminating the problem of inaccurate attachment. In addition, since the 3D model of the hand includes 3D coordinate information of each target point, and such 3D coordinate information can reflect the curvature and the like of a nail, the degree of lifelikeness may be enhanced in the process of attaching the nail art products to the 3D model based on such 3D coordinate information.

Herein, creating the 3D hand model of a user is similar to creating a 3D model of other objects, meaning that the creation may be divided into two steps: modeling and mapping. The modeling process is to complete the creation of a base 3D model (usually called a white model). The base 3D model is mainly used to describe information such as the 3D coordinates of each point in the model. The default mapping is gray or white. In order to digitally reconstruct the specific 3D model more lifelike, i.e., to make it look more like the user's own hand, the base model needs to be mapped. The mapping process brings a modeling model to life. In layman's terms, mapping may be understood as "painting the skin." After a base model is created, the outline of the hand, the thickness of the palm, the length and thickness of the fingers, etc. may all be determined. Then, the hand is provided with a skin through mapping. Instead of being gray or white, when the model is attached to this skin, the color and texture of the model will be closer to a real hand. Therefore, in the process of creating a 3D hand model, acquiring the hand texture map is also an important step.

There are usually two traditional ways to digitally reconstruct target objects: one is to model by a radar. In this case, a target object needs to be placed at a certain position, followed by using the radar to emit photons for scanning. The position of a certain point hit by a photon is calculated based on the time it takes for the photon to hit the point on the surface of the target object and then return. Based on the position information of multiple such points, the creation of a 3D base model of the target object can be implemented. At the same time, the target object may be photographed from multiple angles by a camera or the like, and a mapping of the target object may be obtained from the multi-angle images so as to be attached to the 3D base model.

The second method is to use a camera to take a 360-degree shooting around the target object, and multiple photos taken from multiple angles are obtained to build a 3D base model of the target object. At the same time, a complete mapping of the target object is obtained, and then the mapping is attached to the base model to generate a complete 3D model.

In the above implementations, regardless of using the radar device to scan the target object or taking 360-degree photos of the target object through the camera, there is a strict requirement for the target object to remain still during the scanning or shooting process. Even very subtle shaking or moving of the target object may result in poor reconstruction of the constructed 3D model. In addition, the specific scanning process is usually very time-consuming. Therefore, the above conventional techniques solutions are usually more suitable for non-real-time data reconstruction scenarios. That is, the generation of 3D models may be done offline in advance and then published online for various interactions.

However, in the scenario of the embodiments of the present application, since the user's hand needs to be digitally reconstructed in real time, a modeling process that takes an excessively long time is apparently not suitable. In addition, in C-end consumption scenarios, users usually complete the digital reconstruction of their hands by themselves. That is, a user needs to hold a mobile terminal device such as a mobile phone in one hand and scan the other hand. In this situation, it may be difficult for the user to complete the 360-degree shooting process alone. Furthermore, it is almost impossible to keep a hand completely still during long scanning or shooting processes. The existence of the above-mentioned situations makes it infeasible to create a 3D base model of the hand using the conventional techniques. In some conventional techniques, in order to keep a hand still, a device for carrying or support the hand may be provided, and then others may hold the shooting equipment to complete the 360-degree shooting around the fixed hand, or the 360-degree shooting around the fixed hand may be done by a shooting equipment set up in advance, and so on. However, in C-end consumption scenarios, users usually use their own mobile phones or other terminal devices to operate, and would prefer to finish the task by themselves. Therefore, the above solution is not suitable in C-end consumption scenarios.

In view of the above situations, the embodiment of the present application provides a relatively simple method for creating a 3D hand model of a user, an operation that is suitable to be implemented by users themselves. In this solution, a user may be required to shoot a hand video in a specified manner. The feature of this solution is that it is convenient for the user to complete the operation of shooting one hand while holding the terminal device using the other hand. Specifically, the specified manner may be: capturing images during a process in which a wrist joint is rotated from a first angle to a second angle while maintaining a hand posture with five fingers naturally extended, so that the acquired hand movement video comprises a plurality of image content frames captured during a rotation process of the hand from a front/side view to a side/front view. Herein, in an optional manner, a difference between the second angle and the first angle may be made to be greater than 180 degrees. For example, specifically when the back of the hand faces upward toward the lens of the image acquisition device, the angle of the wrist joint in this state may be referred to as the first angle; thereafter, while the fingers remain in the same state, the wrist joint may be rotated away from the body until the palm faces upward. The rotation continues until the wrist joint cannot be further rotated, and the angle of the wrist joint in this state may be referred to as the second angle. In this case, the angle difference between the second angle and the first angle would be made to be greater than 180 degrees. In this way, users may complete the video capture process on their own without having to keep their hands still or spending a long time, which makes it easy to implement in C-end consumption scenarios. In addition, since the specific video may reflect the process of the hand rotating from the front/side view to the side/front view, the hand profile and images of the front and back sides, left and right sides of the palm and fingers may be obtained as fully as possible to complete the creation of the 3D hand model. Furthermore, since the curvature information of the fingers and/or nails may be more fully retained during the process of rotating the hand from the front/side view to the side/front view, the key point parameters of the fingers and/or nails may be optimized based on the curvature information during the process of creating the 3D hand model, thereby improving the lifelikeness of the 3D hand model.

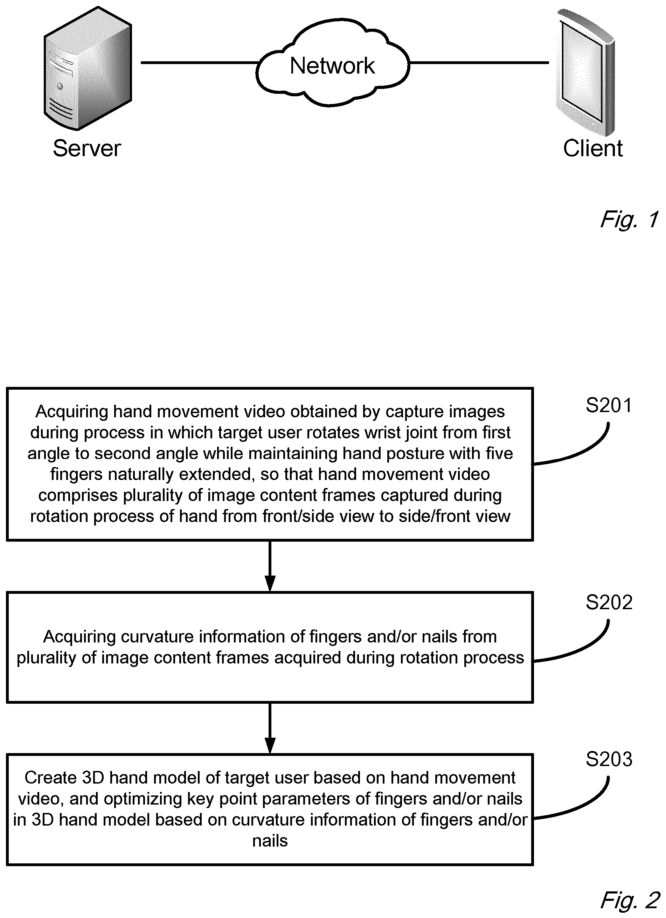

From the perspective of system architecture, the embodiments of the present application are mainly intended to provide C-end users with applications or services for trying on products in categories such as nail art, or may be other application scenarios that require real-time creation of a 3D hand model of a user. Specifically, from the perspective of product form, referring to FIG. 1, an independent application may be provided, or applets, light applications, etc. may be provided in existing applications, or functional modules such as try on may be provided in some related products, and so on. For example, in a payment application, an applet related to "nail art" may be provided. The function of this applet is to provide try on of various nail art products. Users may choose the nail art products that suit them and place an order, etc. based on the try on results. Alternatively, a "try on" module may be provided in the product information service system, and the "try on" module may include the try on of the nail art products published in the system. Alternatively, a "try on" function option may be provided in pages such as the relevant detail pages of nail art products in the product information service system, so that when users browse the product detail pages, they may use this option to try the nail art products associated with the detail page, and may also make comparisons among various SKUs associated with the product, and so on. The process of trying out the product in the above-mentioned scenarios involves real-time digital reconstruction of the user's hand, i.e., real-time creation of a 3D hand model. At this point, the client of the above-mentioned application, applet, or functional module may start the image acquisition unit of the terminal device. The user may rotate the wrist according to the prompts and take a video of the rotation process. In this way, a specific 3D hand model may then be generated based on the hand movement video, and then product try on and other interactions may then be carried out based on the 3D hand model.

As such, even though the interaction such as trying out nail products is not directly done based on the human hand in the video frames, the fact that the specific 3D hand model is a model created based on the hand features of the current user leads to a high degree of reconstruction for the user's hand. Therefore, the visual effects as if the user is personally trying the nail art products may also be presented. At the same time, this interactive process, which is based on the 3D hand model, enables the hand to be in various different postures for try on. Further, the inaccurate attachment of nail art products that happen due to hand movements such as flipping or moving thereof during the change of posture may also be avoided. In addition, since the 3D hand model has 3D coordinate information of key points of the hand, the try-on effect presented after the nail art product is attached to the nails is more lifelike. Furthermore, in the solution of creating a 3D hand model provided in the embodiment of the present application, the user only needs to rotate the wrist joint according to the specified hand posture, and the image acquisition may be completed by users themselves using one hand holding the terminal device, thereby completing the creation of the 3D hand model without having to immobilize the hand and perform a 360-degree shooting. Therefore, the solution is more suitable for implementation in C-end consumer scenarios.

The specific implementation solutions provided by the embodiments of the present application are described in detail below.

First, from the perspective of the aforementioned client, the embodiment of the present application provides a method for generating a 3D hand model. Referring to FIG. 2, the method may comprise:
S201: acquiring a hand movement video obtained by capturing images during a process in which a target user rotates a wrist joint from a first angle to a second angle while maintaining a hand posture with five fingers naturally extended, so that the hand movement video comprises a plurality of image content frames captured during a rotation process of the hand from a front/side view to a side/front view.

In specific implementation, the embodiments of the present application may generally be used to create a 3D hand model in real time when a user has a need to try on a hand-related product. Therefore, step S201 may be triggered by a product try-on request initiated by a user. Alternatively, in other application scenarios, some applications or systems may need to create a 3D hand file of the user. This 3D file may be expressed in the form of a 3D hand model. At this time, when creating a 3D hand file of the user is needed, the collection of the hand movement video in step S201 may be triggered, and so on.

Specifically, when the hand movement video is to be acquired, the user's hand movement video may be acquired in real time, or the user may also upload a hand movement video saved locally. Since there are certain requirements for the user's hand posture in the embodiment of the present application, whether it is real-time acquisition or uploading of locally saved images, it is certainly necessary to meet the requirements as a prerequisite.

Specifically, taking the method of real-time acquisition of a hand movement video as an example. An image acquisition device (camera and the like) in a terminal device associated with the current client may be started. In addition, in an optional implementation manner, prompt information about specific hand postures, movement methods, etc. may also be displayed on the interface during shooting. Such prompt information may exist in the form of text, or it may also be provided in the form of a hand profile diagram in a specific posture, so that the user may make corresponding hand postures and rotate the wrist joint according to the specific prompt information, and then press the shooting button with the hand holding the terminal device.

Specifically, when the hand movement video is to be acquired, the user may be asked to hold the terminal device in one hand and shoot the other hand. During the shooting process, the user may be requested to make the to-be-shot hand in a hand posture with five fingers naturally extended, and rotate the wrist joint from the first angle to the second angle. Then, the image acquisition device of the terminal device can record the rotation process to obtain a hand movement video, and the hand movement video includes a plurality of image content frames captured during the rotation process of the hand from a front/side view to a side/front view. **In** this way, since the hand rotates from the front/side view to the side/front view, information such as the curvature of the fingers and/or nails may be obtained more completely, and this curvature information may be used to optimize the parameters of some key points in the 3D hand model, thereby helping to enhance the lifelikeness of the 3D hand model.

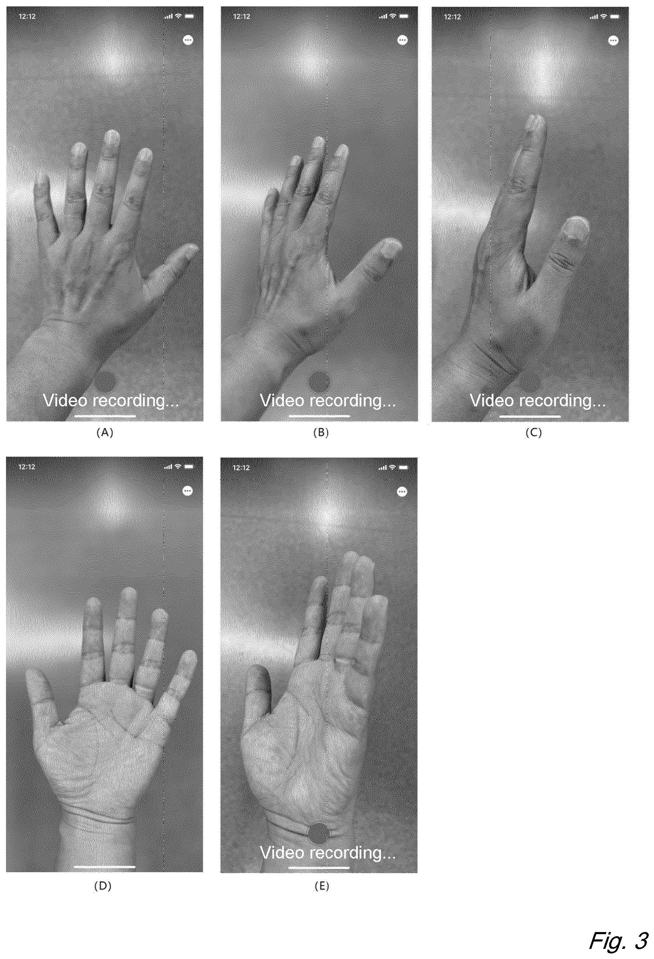

In a preferred implementation manner, in order to better ensure that the hand movement video may cover the rotation process of the hand from the front/side view to the side/front view, the difference between the second angle and the first angle may be required to be greater than or equal to 180 degrees. For example, as shown in (A) to (E) of FIG. 3, the user may, under the guidance of the prompt information, make a gesture with five fingers naturally extended. Then, first when the back of the hand faces upward toward the lens of the image acquisition device, the angle of the wrist joint in this state may be referred to as the first angle; thereafter, while the fingers remain in the same state, the wrist joint may be rotated away from the body until the palm faces upward. The rotation continues until the wrist joint cannot be further rotated, and the angle of the wrist joint in this state may be referred to as the second angle. Since the hand rotates 180 degrees from the back of the hand facing upward to the palm of the hand facing upward, and then continues to rotate, the total rotation angle will be greater than 180 degrees. The palm of the hand may certainly face upward toward the lens of the image acquisition device first, and the angle of the wrist joint in this state may be referred to as the first angle; thereafter, while the fingers remain in the same state, the wrist joint may be rotated toward the body until the back of the hand faces upward. The rotation continues until the wrist joint cannot be further rotated, and the angle of the wrist joint in this state may be referred to as the second angle. In this way, the hand movement video captured in the process may include the front, back, and side images of the palm and each finger as much as possible. In addition, in this way, since the hand movement video records the process of the hand rotating from the front/side to the side/front, it is more conducive to reconstructing the curvature of the fingers and nails. Therefore, this method is more suitable in scenarios that require more accurate digital reconstruction of parts such as nails.

S202: acquiring curvature information of the fingers and/or nails from the plurality of image content frames acquired during the rotation process.

After the hand movement video is captured in the manner shown in step S201, since it may include multiple image content frames captured during the rotation process of the hand from the front/side view to the side/front view, the curvature information of the fingers and/or nails may be obtained from the image content. Herein, the specific implementation solution of obtaining curvature information from the image frames is not the focus of the embodiments of the present application, and thus will not be described in detail herein.

S203: creating a 3D hand model of the target user based on the hand movement video, and optimizing key point parameters of the fingers and/or nails in the 3D hand model based on the curvature information of the fingers and/or nails.

Since the curvature information of the fingers and/or nails is obtained, in the process of creating the 3D hand model of the target user based on the hand movement video, the key point parameters of the finger and/or nail parts in the 3D hand model may be optimized according to the curvature information of the fingers and/or nails. As such, the generated 3D hand model is a more genuine representation of the real hand of the current target user.

Specifically, when the 3D hand model of the target user is to be created based on the hand movement video, a 3D hand base model of the target user may be firstly created based on the hand movement video, and the hand texture map of the target user may be acquired; then, the hand texture map is attached to the 3D hand base model to generate the 3D hand model of the target user.

Regarding the creation of the 3D hand base model, since the embodiments of the present application may be specifically applied to the real-time digital reconstruction of a user's hand, and the traditional methods of creating a 3D base model may not be suitable for this scenario, the embodiments of the present application further provide a method for creating a 3D hand base model. Specifically, in this method, multiple standard 3D hand base models may be created in advance according to common hand shapes. That is, these standard models are not created based on the real hand information of a specific user but are created by classifying hand shapes of a large number of users and then establishing relatively representative 3D hand base models based on these hand shape categories. Herein, this standard 3D hand base model may be a parametric 3D model, meaning the key point parameters in the model can be adjusted. By changing the parameters of some key points (including 3D coordinates and the like), these standard 3D hand base models may be fine-tuned for generating new 3D hand base models.

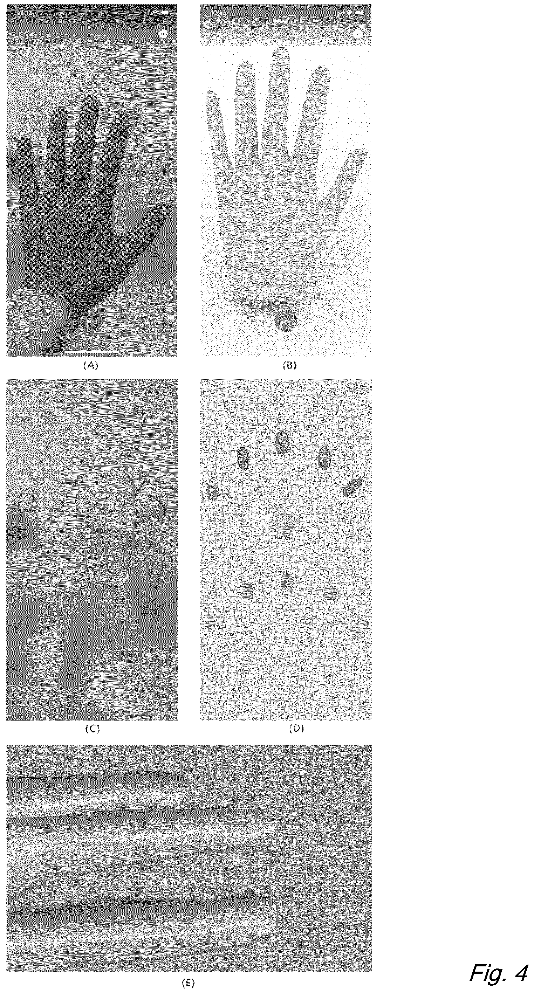

In the case where multiple standard 3D hand base models are created in advance, the hand profile information of the current target user may be directly determined using the hand movement video obtained previously. For example, as shown in (A) of FIG. 4, the hand profile information may be extracted from the front view of the back of the hand. Afterwards, a target standard 3D hand base model satisfying a similarity condition with the hand profile of the current target user may be selected from the aforementioned multiple standard 3D hand base models that are created in advance. For example, a standard 3D hand base model that best represents the hand profile of the current target user may be selected. Afterwards, the key point parameters in the target standard 3D hand base model may be adjusted according to the hand profile information of the current target user to generate a first model. The first model may better represent the actual hand shape of the current target user after further adjustment on the aforementioned selected target standard 3D hand base model, for example, as shown in (B) of FIG. 4. Furthermore, a 3D hand base model of the target user may be generated based on the first model. For example, the first model may be directly used as the 3D hand base model of the target user.

Alternatively, in another manner, considering that in application scenarios such as trying on nail art products, the 3D model of the specific product is mainly attached to the nails, yet the nail shapes of different users might also be different. If the attachment is performed only according to the key points of the nails part in the 3D hand model, the effect afterwards may not be ideal enough. For example, there may be a size mismatch (the edge of the 3D model of the nail art product exceeds the side edge of the nail, or falls on the nail cap), or the fit is not good enough, etc. Therefore, in order to further improve the lifelikeness after attachment, a separate 3D nail model may be further created for the nails. Then, the 3D nail model is combined with the first model created above to generate a complete 3D hand model. In this way, when trying on nail products, the 3D model of the nail product may be attached according to the specific 3D nail model to improve the attachment effect.

In a specific implementation, multiple standard 3D nail base models may further be created in advance for multiple common nail types (nail shapes and the like). Herein, a standard 3D nail base model may include nail models corresponding respectively to five fingers. This standard 3D nail base model may also be a parametric model in that parameters such as the 3D coordinates of some key points therein may be adjusted.

As such, after the aforementioned hand movement video is acquired, the nail profile information corresponding respectively to the multiple fingers may be determined therefrom. For example, as shown in (C) of FIG. 4, specific nail profile information may be acquired from the front view and side view of each nail. In addition, as mentioned above, the curvature information of the nails may also be included. Then, a target standard 3D nail base model satisfying a similarity condition with the nail profile of the current target user may be determined from the multiple standard 3D nail base models created in advance; then, the key point parameters in the target standard 3D nail base model may be adjusted according to the nail profile information of the current target user for generating a second model, for example, as shown in (D) of FIG. 4. In addition, the key point parameters in the second model may be optimized according to the curvature information of the nails. Afterwards, the aforementioned first model and the second model may be combined, meaning each nail model in the second model may be aligned and attached to the first model, as shown in (E) of FIG. 4, so as to generate a 3D hand base model of the current target user. In this way, it is equivalent to that there is a separate 3D nail model for the nails. When the 3D model of the nail art product is to be attached, the 3D model of the product may also be parameterized, and the key point parameters of the product 3D model may be adjusted according to the specific key point parameters in the 3D nail model before attachment, so as to improve the attachment effect.

In addition to creating a 3D hand base model, a hand texture map of the target user may further be acquired. Specifically, when the hand texture map is to be acquired, local images of multiple texture map surfaces may be identified and segmented from the hand movement video according to preset hand texture map style information, and then a complete hand texture map may be generated by fusing the local images of the multiple texture map surfaces. Specifically, when identifying and segmenting multiple local images of texture map surfaces from the hand movement video, if some texture map surfaces are blocked or partially blocked, image processing technology may be used to estimate these blocked local images and complete each texture map surface using other images that can be acquired.

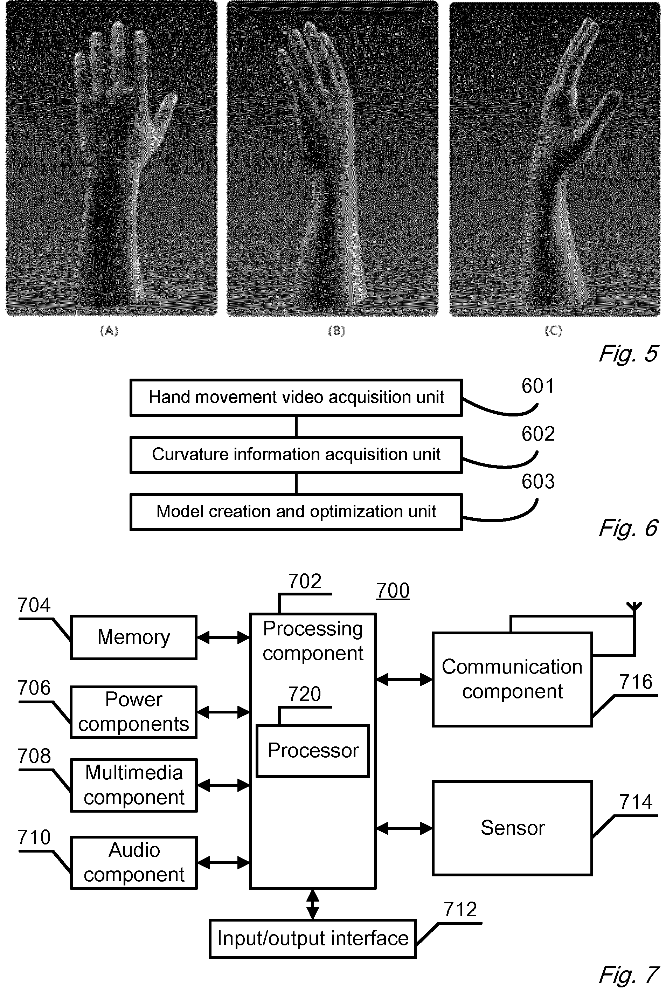

After the hand texture map is obtained, a specific 3D hand model may be generated by attaching the hand texture map to the 3D hand base model. Afterwards, the 3D hand model may be rendered and displayed. For example, for the example shown in FIG. 3, the back of the hand of the finally generated 3D hand model may be displayed as shown in (A) of FIG. 5. In addition, the presentation effect of the 3D hand model in other postures may be shown in (B) and (C) of FIG. 5. Afterwards, various interactions may be performed based on this 3D hand model, for example, displaying try-on effects for nail art products, ring products, etc.

In summary, through the embodiments of the present application, a hand movement video may be acquired by capturing images during a process in which a target user rotates a wrist joint from a first angle to a second angle while maintaining a hand posture with five fingers naturally extended. In this way, a 3D hand model of the target user may be created based on the hand movement video. In this way, since C-end users may complete the hand movement video acquiring operation on their own, it is thus more suitable to be implemented in C-end consumption scenarios. In addition, since the hand movement video may include a plurality of image content frames captured during a rotation process of the hand from a front/side view to a side/front view, the curvature information of the fingers and/or nails may be acquired therefrom. Furthermore, when a 3D hand model of the target user is created based on the hand movement video, key point parameters of the fingers and/or nails in the 3D hand model may be optimized based on the curvature information of the fingers and/or nails. This may enhance the lifelikeness of the 3D hand model, which in turn allows for more realistic try-on effects in scenarios such as virtual try on of nail care products.

It should be noted that the embodiments of the present application may involve the use of user data. In practical applications, user-specific personal data may be used in the solutions described herein to the extent permitted by applicable laws and regulations (e.g., explicit consent from the users, effective notification to the users, etc.) in compliance with applicable laws and regulations of the country where the solutions are implemented.

Corresponding to the previous method embodiment, the embodiment of the present application further provides an apparatus for generating a 3D hand model. Referring to FIG. 6, the apparatus may comprise:
a hand movement video acquisition unit 601, configured for acquiring a hand movement video obtained by capturing images during a process in which a target user rotates a wrist joint from a first angle to a second angle while maintaining a hand posture with five fingers naturally extended, so that the hand movement video comprises a plurality of image content frames captured during a rotation process of the hand from a front/side view to a side/front view;
a curvature information acquisition unit 602, configured for acquiring curvature information of the fingers and/or nails from the plurality of image content frames acquired during the rotation process; and
a model creation and optimization unit 603, configured for creating a 3D hand model of the target user based on the hand movement video, and optimizing key point parameters of the fingers and/or nails in the 3D hand model based on the curvature information of the fingers and/or nails.

Preferably, an angle difference between the second angle and the first angle is greater than or equal to 180 degrees.

Specifically, an angle of the wrist joint when the back of the hand/palm faces upward to an image acquisition device while the hand posture is maintained with five fingers naturally extended is taken as the first angle; after the wrist joint is rotated toward/away from the body until the palm/back of the hand faces upward, an angle at which the rotation continues until a limit of rotation is reached is taken as the second angle.

The model creation and optimization unit may be specifically configured for:
a base model creation and mapping acquisition subunit, configured for creating a 3D hand base model of the target user according to the hand movement video, and acquiring a hand texture map of the target user;
a mapping attaching subunit, configured for attaching the hand texture map to the 3D hand base model to generate the 3D hand model of the target user.

Specifically, when creating a 3D base model, the base model creation and mapping acquisition subunit may be specifically configured for:
determining, from the hand movement video, hand profile information;
determining, from a plurality of standard 3D hand base models created in advance, a target standard 3D hand base model satisfying a similarity condition with the hand profile, wherein the standard 3D hand base model is a parameterized model; and
adjusting, according to the hand profile information, the key point parameters in the target standard 3D hand base model to obtain a first model, so as to generate, according to the first model, the 3D hand base model of the target user.

Optionally, the apparatus may further include:
a nail profile information determination unit, configured for determining, from the hand movement video, nail profile information;
a standard nail model determination unit, configured for determining, from a plurality of standard 3D nail base models created in advance, a target standard 3D nail base model satisfying a similarity condition with the nail profile, wherein the standard 3D nail base model is a parameterized model; and
a second model creation unit, configured for adjusting, according to the nail profile information, the key point parameters in the target standard 3D nail base model to obtain a second model;
at this point, the base model creation and mapping acquisition subunit may specifically be configured for:
   generating a 3D hand base model of the target user by aligning and fitting the second model to the first model.

Specifically, the base model creation and mapping acquisition subunit may further be configured for:
optimizing, according to the curvature information of the nails, key point parameters in the second model.

**In** addition, when acquiring hand texture map, the base model creation and mapping acquisition subunit may be specifically configured for:
identifying and segmenting a plurality of local images of texture map surfaces from the hand movement video according to preset hand texture map style information;
generating a complete hand texture map by fusing the plurality of local images of the texture map surfaces.

In addition, the embodiment of the present application further provides a computer-readable storage medium having a computer program stored thereon which, when executed by a processor, implements the steps of the methods described in any of the above-described method embodiments.

Further provided is an electronic device, comprising:
one or more processors; and
a memory associated with the one or more processors, the memory being configured to store program instructions which, when read and executed by the one or more processors, execute the steps of the methods described in any of the above-described method embodiments.

FIG. 7 exemplarily shows the architecture of an electronic device, for example, the device 700 may be a mobile phone, a computer, a digital broadcasting terminal, a messaging device, a game console, a tablet device, a medical device, a fitness device, a personal digital assistant, an aircraft, and the like.

Referring to FIG. 7, the device 700 may include one or more of the following components: a processing component 702, a memory 704, a power component 706, a multimedia component 708, an audio component 710, an input/output (I/O) interface 712, a sensor component 714, and a communication component 716.

The processing component 702 generally controls the overall operation of the device 700, such as operations associated with display, phone calls, data communications, camera operations, and recording operations. The processing component 702 may include one or more processors 720 to execute instructions to complete all or part of the steps of the methods provided by the technical solutions of the present disclosure. Additionally, the processing component 702 may include one or more modules to facilitate the interaction between the processing component 702 and other components. For example, the processing component 702 may include a multimedia module to facilitate interaction between the multimedia component 708 and the processing component 702.

The memory 704 is configured to store various types of data to support operations on the device 700. Examples of such data include instructions, contact data, phonebook data, messages, pictures, videos and the like used for any application programs or methods operating on the device 700. The memory 704 may be implemented by any type of volatile or non-volatile memory device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk, or optical disk.

The power component 706 provides power to the various components of the device 700. The power components 706 may include a power management system, one or more power supplies, and other components associated with generating, managing, and distributing power for the device 700.

The multimedia component 708 includes a screen that provides an output interface between the device 700 and users. In some embodiments, the screen may include a liquid crystal display (LCD) and a touch panel (TP). If the screen includes a touch panel, the screen may be implemented as a touch screen to receive input signals from a user. The touch panel includes one or more touch sensors to sense touch, swiping, and gestures on the touch panel. The touch sensor may not only sense the boundary of a touch or slide action, but also detect the duration and pressure related to the touch or sliding operation. In some embodiments, the multimedia component 708 includes a front-facing camera and/or a rear-facing camera. When the device 700 is in an operation mode, such as a photo-taking mode or a video mode, the front-facing camera and/or the rear-facing camera may receive external multimedia data. Each of the front-facing camera and/or the rear-facing camera may be a fixed optical lens system or have focal length and optical zoom capability.

The audio component 710 is configured to output and/or input audio signals. For example, the audio component 710 includes a microphone (MIC) configured to receive an external audio signal when the device 700 is in an operating mode, for example, in a call mode, recording mode, or voice recognition mode. The received audio signal may be further stored in the memory 704 or sent through the communication component 716. In some embodiments, the audio component 710 further includes a speaker for outputting an audio signal.

The I/O interface 712 provides an interface between the processing component 702 and a peripheral interface module that may be a keyboard, a clickwheel, buttons, or the like. These buttons may include, but are not limited to: home button, volume buttons, start button, and lock button.

The sensor component 714 includes one or more sensors for providing status assessment of various aspects of the device 700. For example, the sensor component 714 can detect the open/closed state of the device 700, and the relative positioning of components such as the display and keypad of the device 700. The sensor component 714 can further detect a change in the position of the device 700 or a component of the device 700, the presence or absence of user contact with the device 700, orientation or acceleration/deceleration of the device 700, and temperature changes of the device 700. The sensor component 714 may include a proximity sensor configured to detect the presence of nearby objects in the absence of any physical contact. The sensor component 714 may also include a light sensor such as a CMOS or CCD image sensor for use in imaging applications. In some embodiments, the sensor component 714 may also include an acceleration sensor, a gyroscope sensor, a magnetic sensor, a pressure sensor, or a temperature sensor.

The communication component 716 is configured to facilitate wired or wireless communications between the device 700 and other devices. The device 700 can access a wireless network based on communication standards, such as mobile communication networks like WiFi, or 2G, 3G, 4G/LTE, and 5G. In an exemplary embodiment, the communication component 716 receives, through a broadcast channel, broadcast signals or broadcast-related information from an external broadcast management system. In an exemplary embodiment, the communication component 716 further comprises a near field communication (NFC) module to facilitate short range communications. For example, the NFC module can be implemented based on the radio frequency identifier (RFID) technology, the infrared data association (IrDA) technology, the ultra-wideband (UWB) technology, the Bluetooth (BT) technology, and other technologies.

In an exemplary embodiment, the device 700 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components for performing the above methods.

In an exemplary embodiment, a non-transitory computer-readable storage medium having instructions is also provided, such as the memory 704 having instructions, and the above-mentioned instructions can be executed by the processor 720 of the device 700 to complete the method provided by the technical solution of the present disclosure. For example, the non-transitory computer-readable storage medium may be ROM, random access memory (RAM), CD-ROM, a magnetic tape, a floppy disk, an optical data storage device, and the like.

As can be seen from the description of the above embodiments, it is clear that the present application can be implemented by means of software plus the necessary general hardware platform. Based on such an understanding, the part of the technical solution of the present application, which is essential or contributes to the conventional techniques, can be embodied in the form of a software product. The computer software product can be stored in a storage medium, such as a ROM/RAM, a magnetic disk, and an optical disk, and include several instructions for enabling a computer device (which may be a personal computer, a server, a network device, or the like) to execute the methods described in the embodiments or some parts of the embodiments of the present application.

The various embodiments in this specification are all described in a progressive manner. The various embodiments may refer to other embodiments for the same or similar parts, and each of the embodiments focuses on the parts differing from the other embodiments. In particular, the system or system embodiments are basically similar to the method embodiments, the description for these embodiments is thus relatively brief, and the description of the method embodiments may be referred to for relevant details. The system and system embodiments described above are only examples, wherein the units described as separate components may or may not be physically separated; and the components displayed as units may or may not be physical units; that is, the units may be located in one place, or may be distributed on a plurality of network units. Some or all of the modules may be selected according to actual needs to achieve the objectives of the solutions of the embodiments. Those of ordinary skill in the art may understand and implement the embodiments without creative efforts.

The method, apparatus, and electronic device for generating a 3D hand model provided by the present application have been introduced in detail above. The principles and implementations of the present application are described with specific examples herein. The descriptions of the above embodiments are only used to help understand the methods and the core idea of the present application. At the same time, for those skilled in the art, there will be modifications in specific implementations and the application scope according to the idea of the present application. In conclusion, the content of the present specification should not be construed as a limitation to the present application.

## Claims

1. A method for generating a 3D hand model, the method comprising:
acquiring a hand movement video obtained by capturing images during a process in which a target user rotates a wrist joint from a first angle to a second angle while maintaining a hand posture with five fingers naturally extended, so that the hand movement video comprises a plurality of image content frames captured during a rotation process of a hand from a front/side view to a side/front view;
acquiring curvature information of fingers and/or nails from the plurality of image content frames acquired during the rotation process; and
creating a 3D hand model of the target user based on the hand movement video, and optimizing key point parameters of the fingers and/or nails in the 3D hand model based on the curvature information of the fingers and/or nails.

2. The method according to claim 1, wherein an angle difference between the second angle and the first angle is greater than or equal to 180 degrees.

3. The method according to claim 2, wherein:
an angle of the wrist joint when a back of a hand / a palm faces upward to an image acquisition device while the hand posture is maintained with five fingers naturally extended is taken as the first angle; and
after the wrist joint is rotated toward/away from a body until the palm / the back of the hand faces upward, an angle at which the rotation continues until a limit of rotation is reached is taken as the second angle.

4. The method according to claim 1, wherein the creating the 3D hand model of the target user based on the hand movement video comprises:
creating a 3D hand base model of the target user according to the hand movement video, and acquiring a hand texture map of the target user; and
attaching the hand texture map to the 3D hand base model to generate the 3D hand model of the target user.

5. The method according to claim 4, wherein the creating the 3D hand base model of the target user according to the hand movement video comprises:
determining, from the hand movement video, hand profile information;
determining, from a plurality of standard 3D hand base models created in advance, a target standard 3D hand base model satisfying a similarity condition with a hand profile, wherein a standard 3D hand base model is a parameterized model; and
adjusting, according to the hand profile information, the key point parameters in the target standard 3D hand base model to obtain a first model, so as to generate, according to the first model, the 3D hand base model of the target user.

6. The method according to claim 5, wherein:
the method further comprises:
determining, from the hand movement video, nail profile information;
determining, from a plurality of standard 3D nail base models created in advance, a target standard 3D nail base model satisfying a similarity condition with a nail profile, wherein a standard 3D nail base model is a parameterized model; and
adjusting, according to the nail profile information, the key point parameters in the target standard 3D nail base model to obtain a second model; and
the generate, according to the first model, the 3D hand base model of the target user comprises generating a 3D hand base model of the target user by aligning and fitting the second model to the first model.

7. The method according to claim 6, wherein the optimizing key point parameters of the fingers and/or nails in the 3D hand model based on the curvature information of the fingers and/or nails comprises:
optimizing, according to the curvature information of the nails, key point parameters in the second model.

8. The method according to claim 4, wherein the acquiring the hand texture map of the target user comprises:
identifying and segmenting a plurality of local images of texture map surfaces from the hand movement video according to preset hand texture map style information; and
generating a complete hand texture map by fusing the plurality of local images of the texture map surfaces.

9. An apparatus for generating a 3D hand model, the apparatus comprising:
a hand movement video acquisition unit, configured for acquiring a hand movement video obtained by capturing images during a process in which a target user rotates a wrist joint from a first angle to a second angle while maintaining a hand posture with five fingers naturally extended, so that the hand movement video comprises a plurality of image content frames captured during a rotation process of a hand from a front/side view to a side/front view;
a curvature information acquisition unit, configured for acquiring curvature information of fingers and/or nails from the plurality of image content frames acquired during the rotation process; and
a model creation and optimization unit, configured for creating a 3D hand model of the target user based on the hand movement video, and optimizing key point parameters of the fingers and/or nails in the 3D hand model based on the curvature information of the fingers and/or nails.

10. A computer-readable storage medium having a computer program stored thereon which, when executed by a processor, executes steps of the method according to any one of claims 1 to 8.

11. An electronic device comprising:
one or more processors; and
a memory associated with the one or more processors, the memory being configured to store program instructions which, when read and executed by the one or more processors, execute steps of the method according to any one of claims 1 to 8.
